# EUROPÄISCHE PATENTANMELDUNG

(11) **EP 2 146 066 A1**
(43) Veröffentlichungstag der Anmeldung: **20.01.2010**
(21) Anmeldenummer: 09165449.1
(22) Anmeldetag: 14.07.2009
(51) Int. Cl.: F01N 3/28, F02B 37/02

(54) **Aufgeladene Brennkraftmaschine mit Turbine und Abgasnachbehandlungssystem**

(30) Priorität: 14.07.2008 DE 102008033043; 08.08.2008 DE 102008036945
(71) Anmelder: Ford Global Technologies, LLC, Dearborn, MI 48126 (US)
(72) Erfinder: Kuhlbach, Kai, 51427, Bergisch Gladbach (DE); Krzykowski, Heinrich, 58313, Herdecke (DE)
(74) Vertreter: Drömer, Hans-Carsten

(57) **Zusammenfassung**

Die Erfindung betrifft eine aufgeladene Brennkraftmaschine (1) mit
- mindestens einem Zylinderkopf mit mindestens zwei Zylindern (2a), bei dem jeder Zylinder (2a) mindestens eine Auslaßöffnung zum Abführen der Abgase aus dem Zylinder (2a) aufweist und sich stromabwärts an jede Auslaßöffnung eine Abgasleitung (3) anschließt,
- mindestens einer Turbine (7a), die ein auf einer Welle (11) drehbar gelagertes Laufrad aufweist, und
- mindestens einem Abgasnachbehandlungssystem (9), wobei
- die Abgasleitungen (3) von mindestens zwei Zylindern (2a) unter Ausbildung eines integrierten Abgaskrümmers (6) innerhalb des Zylinderkopfes zu einer Gesamtabgasleitung (5) zusammenführen und diese Gesamtabgasleitung (5) mit der mindestens einen Turbine (7a) verbunden ist,
- das mindestens eine Abgasnachbehandlungssystem (9) stromabwärts der mindestens einen Turbine (7a) angeordnet ist, und
- der mindestens eine Zylinderkopf an einer Montage-Stirnseite mit einem Zylinderblock (2) verbindbar ist.

Es soll eine aufgeladene Brennkraftmaschine (1) der genannten Art bereitgestellt werden, bei der eine möglichst motornahe Anordnung sowohl der Turbine (7a) als auch des Abgasnachbehandlungssystems (9) realisiert wird.

Erreicht wird dies mit einer aufgeladenen Brennkraftmaschine (1) der oben genannten Art, die dadurch gekennzeichnet ist, dass
- das Laufrad der mindestens einen Turbine (7a) auf der der Montage-Stirnseite abgewandten Seite des integrierten Abgaskrümmers (6) angeordnet ist, und
- das mindestens eine Abgasnachbehandlungssystem (9) seitlich des Zylinderblocks (2) angeordnet ist, wobei sich das Abgasnachbehandlungssystem (9) im Wesentlichen in Richtung der Zylinder (2a) erstreckt.

## Beschreibung

Die Erfindung betrifft eine aufgeladene Brennkraftmaschine mit
- mindestens einem Zylinderkopf mit mindestens zwei Zylindern, bei dem jeder Zylinder mindestens eine Auslaßöffnung zum Abführen der Abgase aus dem Zylinder aufweist und sich stromabwärts an jede Auslaßöffnung eine Abgasleitung anschließt,
- mindestens einer Turbine, die ein auf einer Welle drehbar gelagertes Laufrad aufweist, und
- mindestens einem Abgasnachbehandlungssystem, wobei
- die Abgasleitungen von mindestens zwei Zylindern unter Ausbildung eines integrierten Abgaskrümmers innerhalb des Zylinderkopfes zu einer Gesamtabgasleitung zusammenführen und diese Gesamtabgasleitung mit der mindestens einen Turbine verbunden ist,
- das mindestens eine Abgasnachbehandlungssystem stromabwärts der mindestens einen Turbine angeordnet ist, und
- der mindestens eine Zylinderkopf an einer Montage-Stirnseite mit einem Zylinderblock verbindbar ist.

Im Rahmen der vorliegenden Erfindung umfaßt der Begriff Brennkraftmaschine Dieselmotoren, Ottomotoren, aber auch Hybrid-Brennkraftmaschinen.

Brennkraftmaschinen verfügen über einen Zylinderblock und mindestens einen Zylinderkopf, die zur Ausbildung der einzelnen Zylinder, d. h. Brennräume an ihren Montage-Stirnseiten miteinander verbunden werden.

Der Zylinderblock weist zur Aufnahme der Kolben bzw. der Zylinderrohre eine entsprechende Anzahl an Zylinderbohrungen auf. Die Kolben werden axial beweglich in den Zylinderrohren geführt und bilden zusammen mit den Zylinderrohren und dem Zylinderkopf die Brennräume der Brennkraftmaschine aus.

Der Zylinderkopf dient häufig auch zur Aufnahme des Ventiltriebs. Um den Ladungswechsel zu steuern, benötigt eine Brennkraftmaschine Steuerorgane und Betätigungseinrichtungen zur Betätigung dieser Steuerorgane. Im Rahmen des Ladungswechsels erfolgt das Ausschieben der Verbrennungsgase über die Auslaßöffnungen und das Füllen des Brennraums, d. h. das Ansaugen des Frischgemisches bzw. der Frischluft über die Einlaßöffnungen. Zur Steuerung des Ladungswechsels werden bei Viertaktmotoren nahezu ausschließlich Hubventile als Steuerorgane verwendet, die während des Betriebs der Brennkraftmaschine eine oszillierende Hubbewegung ausführen und auf diese Weise die Ein- und Auslaßöffnungen freigeben und verschließen. Der für die Bewegung der Ventile erforderliche Ventilbetätigungsmechanismus einschließlich der Ventile selbst wird als Ventiltrieb bezeichnet.

Es ist die Aufgabe des Ventiltriebs die Einlaß- und Auslaßöffnungen der Brennkammer rechtzeitig freizugeben bzw. zu schließen, wobei eine schnelle Freigabe möglichst großer Strömungsquerschnitte angestrebt wird, um die Drosselverluste in den ein- bzw. ausströmenden Gasströmungen gering zu halten und eine möglichst gute Füllung des Brennraumes mit Frischgemisch bzw. ein effektives, d. h. vollständiges Abführen der Abgase zu gewährleisten. Nach dem Stand der Technik werden daher auch zunehmend zwei oder mehr Einlaß- bzw. Auslaßöffnungen vorgesehen.

Die Einlaßkanäle, die zu den Einlaßöffnungen führen, und die Auslaßkanäle bzw. Abgasleitungen, die sich an die Auslaßöffnungen anschließen, sind nach dem Stand der Technik zumindest teilweise im Zylinderkopf integriert. Sind zwei oder mehr Auslaßöffnungen je Zylinder vorgesehen, werden die Abgasleitungen jedes Zylinders häufig - innerhalb des Zylinderkopfes - zu einer dem Zylinder zugehörigen Teilabgasleitung zusammengeführt, bevor diese Teilabgasleitungen dann zu einer Gesamtabgasleitung zusammengeführt werden. Die Zusammenführung der Abgasleitungen bis hin zu der Gesamtabgasleitung wird im allgemein und im Rahmen der vorliegenden Erfindung als Abgaskrümmer bzw. Krümmer bezeichnet.

Stromabwärts des Krümmers werden die Abgase dann der Turbine mindestens eines Abgasturboladers und einem oder mehreren Abgasnachbehandlungssystemen zugeführt.

Es wird angestrebt, die Turbine möglichst nahe am Auslaß der Brennkraftmaschine anzuordnen, um auf diese Weise die Abgasenthalpie der heißen Abgase, die maßgeblich vom Abgasdruck und der Abgastemperatur bestimmt wird, optimal nutzen zu können und ein schnelles Ansprechverhalten des Turboladers zu gewährleisten, da zur Verbesserung des Ansprechverhaltens das Abgasvolumen in den Abgasleitungen stromaufwärts der Turbine möglichst gering sein sollte. Zum anderen soll auch der Weg der heißen Abgase zu den verschiedenen Abgasnachbehandlungssystemen möglichst kurz sein, damit den Abgasen wenig Zeit zur Abkühlung eingeräumt wird und die Abgasnachbehandlungssysteme möglichst schnell ihre Betriebstemperatur bzw. Anspringtemperatur erreichen, insbesondere nach einem Kaltstart der Brennkraftmaschine.

In diesem Zusammenhang ist man daher grundsätzlich bemüht, die thermische Trägheit des Teilstücks der Abgasleitung zwischen Auslaßöffnung am Zylinder und Abgasnachbehandlungssystem bzw. zwischen Auslaßöffnung am Zylinder und Turbine zu minimieren, was durch Reduzierung der Masse und der Länge dieses Teilstückes erreicht werden kann. Diese Maßnahme reduziert auch die mit Abgas beaufschlagte Oberfläche des Abgassystems stromaufwärts des Abgasnachbehandlungssystems bzw. stromaufwärts der Turbine und damit den Wärmeübergang. Geeignete Werkstoffe sind ebenfalls zielführend.

Im Hinblick auf den Einsatz eines Turboladers wird zudem angestrebt, den Druckverlust in der Abgasströmung bis zum Eintritt in die Turbine möglichst gering zu halten, was durch eine geeignete Strömungsführung und eine weitestgehende Verkürzung der Abgasleitungen erreicht werden kann.

Um die zuvor genannten Ziele zu erreichen, wird der Abgaskrümmer nach dem Stand der Technik und auch erfindungsgemäß vollständig in den Zylinderkopf integriert. Ein derartiger Zylinderkopf zeichnet sich durch eine sehr kompakte Bauweise aus, wobei die Gesamtwegstrecke der Abgasleitungen des Abgaskrümmers und das Volumen der Abgasleitungen stromaufwärts der Turbine bzw. stromaufwärts des Abgasnachhandlungssystems minimiert werden können.

Ein Zylinderkopf mit mindestens zwei Zylindern, bei dem sich an jede Auslaßöffnung eine Abgasleitung anschließt und die Abgasleitungen von mindestens zwei Zylindern innerhalb des Zylinderkopfes zu einer Gesamtabgasleitung zusammenführen, ist daher auch mit ein Gegenstand der vorliegenden Erfindung.

Die Verwendung eines derartigen Zylinderkopfes führt des Weiteren zu einer geringeren Anzahl an Bauteilen und folglich zu einer Verringerung der Kosten, insbesondere der Montage- und Bereitstellungskosten. Durch die kompakte Bauweise des Zylinderkopfes wird auch ein dichtes Packaging der Antriebseinheit ermöglicht.

Ein Abgasnachbehandlungssystem stromabwärts der Turbine wird nach dem Stand der Technik in der Regel benachbart zur Getriebeglocke - häufig quer - angeordnet, d. h. eingebaut, so dass eine nicht unerhebliche Wegstrecke zwischen Turbine und Abgasnachbehandlungssystem mittels Abgasleitung zu überbrücken ist.

Im Hinblick auf die oben genannten Ziele wäre es hingegen vorteilhaft, das Abgas unmittelbar nach Durchlaufen der Turbine einer Abgasnachbehandlung zuzuführen, um eine hohe Konvertierungsrate zu realisieren bzw. zu gewährleisten. Insofern wäre ein sich unmittelbar an die Turbine anschließendes Abgasnachbehandlungssystem zu bevorzugen. Eine derartige Anordnung wird aber erschwert durch die beengten Platzverhältnisse im Motorraum bzw. am Zylinderkopf und eine Entwicklung hin zu großvolumigen Abgasnachbehandlungssystemen.

Letzteres ist auch dadurch bedingt, dass zur Einhaltung der immer restriktiveren Grenzwerte für Schadstoffemissionen ausreichend große Volumina erforderlich sind. Das Volumen des Abgasnachbehandlungssystems hat Einfluß auf die Verweildauer des Abgases im Nachbehandlungssystem und damit auf die Konvertierung der Schadstoffe, d. h. die Konvertierungsrate.

Des Weiteren werden zunehmend kombinierte Abgasnachbehandlungssysteme eingesetzt, die unterschiedliche Katalysatoren und/oder Filter umfassen, d. h. in sich vereinigen. So werden Oxidationskatalysatoren, Stickoxidspeicherkatalysatoren, selektive Katalysatoren und/oder Partikelfilter kombiniert als integrale Abgasnachbehandlungssysteme ausgeführt, weshalb sich das Volumen der Nachbehandlungssysteme vergrößert. Größer dimensionierte Abgasnachbehandlungssysteme benötigen aber mehr Bauraum, was einem dichten Packaging und einer möglichst vorteilhaften, d. h. motornahen Anordnung entgegen steht.

Vor dem Hintergrund des oben Gesagten ist es die Aufgabe der vorliegenden Erfindung, eine aufgeladene Brennkraftmaschine gemäß dem Oberbegriff des Anspruchs 1, d. h. der gattungsbildenden Art bereitzustellen, die hinsichtlich der oben genannten Zielsetzungen optimiert ist, d. h. bei der insbesondere eine möglichst motornahe Anordnung sowohl der Turbine als auch des Abgasnachbehandlungssystems realisiert wird.

Gelöst wird diese Aufgabe durch eine aufgeladene Brennkraftmaschine mit
- mindestens einem Zylinderkopf mit mindestens zwei Zylindern, bei dem jeder Zylinder mindestens eine Auslaßöffnung zum Abführen der Abgase aus dem Zylinder aufweist und sich stromabwärts an jede Auslaßöffnung eine Abgasleitung anschließt,
- mindestens einer Turbine, die ein auf einer Welle drehbar gelagertes Laufrad aufweist, und
- mindestens einem Abgasnachbehandlungssystem, wobei
- die Abgasleitungen von mindestens zwei Zylindern unter Ausbildung eines integrierten Abgaskrümmers innerhalb des Zylinderkopfes zu einer Gesamtabgasleitung zusammenführen und diese Gesamtabgasleitung mit der mindestens einen Turbine verbunden ist,
- das mindestens eine Abgasnachbehandlungssystem stromabwärts der mindestens einen Turbine angeordnet ist, und
- der mindestens eine Zylinderkopf an einer Montage-Stirnseite mit einem Zylinderblock verbindbar ist,
und die dadurch gekennzeichnet ist, dass
- das Laufrad der mindestens einen Turbine auf der der Montage-Stirnseite abgewandten Seite des integrierten Abgaskrümmers angeordnet ist, und
- das mindestens eine Abgasnachbehandlungssystem seitlich des Zylinderblocks angeordnet ist, wobei sich das Abgasnachbehandlungssystem im Wesentlichen in Richtung der Zylinder erstreckt.

Erfindungsgemäß wird das mindestens eine Abgasnachbehandlungssystem seitlich des Zylinderblocks angeordnet und zwar in der Art, dass es sich im Wesentlichen in Richtung der Zylinder erstreckt. Das letztgenannte Merkmal, nach welchem sich das Abgasnachbehandlungssystem im Wesentlichen in Richtung der Zylinder erstreckt, ist im Rahmen der vorliegenden Erfindung dahingehend auszulegen, dass das Abgasnachbehandlungssystem, d. h. die Längsachse des Abgasnachbehandlungssystems, welche durch die Hauptdurchströmungsrichtung des Abgases vorgegeben wird, mit den Zylinderlängsachsen zumindest in der Projektion in Richtung der Kurbelwelle einen spitzen Winkel α < 45° bildet bzw. parallel beabstandet zu den Zylinderlängsachsen verläuft.

Die erfindungsgemäße Anordnung des Abgasnachbehandlungssystems ermöglicht ein dichtes Packaging. Darüber hinaus muß das aus der Turbine austretende Abgas nur eine kurze Wegstrecke bis hin zur Abgasnachbehandlung zurücklegen. Insbesondere können Ausführungsformen, bei denen sich das Abgasnachbehandlungssystem unmittelbar an die Turbine anschließt und der Austrittsbereich der Turbine unmittelbar in den Eingangsbereich zum Abgasnachbehandlungssystem übergeht, realisiert werden. Sowohl die Turbine als auch das Abgasnachbehandlungssystem können überaus motornah angeordnet werden.

Die Anordnung des gegebenenfalls großvolumigen Abgasnachbehandlungssystems seitlich des Zylinderblocks wird auch dadurch ermöglicht, dass das Laufrad der mindestens einen Turbine oberhalb des integrierten Abgaskrümmers, d. h. auf der der Montage-Stirnseite abgewandten Seite des integrierten Abgaskrümmers angeordnet ist. Im Rahmen der vorliegenden Erfindung gilt das Laufrad bereits als oberhalb des Krümmers gelegen, wenn die Drehachse des Laufrades, d. h. die Turbinenwelle, auf der das Laufrad drehbar gelagert ist, oberhalb des Krümmers, d. h. auf der der Montage-Stirnseite abgewandten Seite des Krümmers und damit auf der dem Zylinderblock abgewandten Seite des Krümmers liegt. Zur Verwirklichung des in Rede stehenden Merkmals ist es nicht erforderlich, dass das gesamte Laufrad oberhalb des Krümmers angeordnet wird.

Die erfindungsgemäße Brennkraftmaschine weist einen Zylinderkopf auf, der mindestens einen integrierten Abgaskrümmer zum Abführen von Abgasen über eine aus dem Zylinderkopf austretende Gesamtabgasleitung enthält, an die, in Strömungsrichtung fluchtend, der Eintrittsbereich einer Turbine eines Abgasturboladers möglichst unmittelbar anschließt.

Der Schwerpunkt der Turbine weist erfindungsgemäß einen geringeren Abstand zum Zylinderkopf auf.

Bevorzugt soll der Eintrittsbereich der schneckenförmigen Luftführung zur Turbine ohne weiteres Zwischenstück mit der Gesamtabgasleitung verbunden sein.

Weiter bevorzugt bildet dieser Eintrittsbereich der Turbine einen integralen Teil der Gesamtabgasleitung.

Weiter bevorzugt verläuft die Turbinenachse etwa parallel zur Längsachse des Zylinderkopfes und ist oberhalb der Gesamtabgasleitung angeordnet Zusätzlich wird die dem Zylinderkopf zugewandte Außenwand des Turbinengehäuses möglichst nah der Stelle bzw. dem Bereich angeordnet, in dem die Abgasleitungen zu der Gesamtabgasleitung zusammenführen. Dies ist im Wesentlichen die Stelle, an der die Stromfäden der von den Zylindern kommenden flüssigkeitsgekühlten Abgaskanäle zusammenlaufen. Als Stromfäden sind hier etwa die Mittellinien der der von den Zylindern kommenden flüssigkeitsgekühlten Abgaskanäle anzusehen.

Mit dem Turbinengehäuse rücken die Turbinenachse und das Turbinenrad und damit der Turbinenschwerpunkt möglichst nah an den Zylinderkopf.
Bevorzugt ist der Abstand zwischen Turbinenachse und der Stelle, an der die Stromfäden der von den Zylindern kommenden flüssigkeitsgekühlten Abgaskanäle zusammenlaufen etwa so groß wie der Turbinenradradius. Weiter bevorzugt ist der Abstand zwischen Turbinenachse und der Stelle, an der die Stromfäden der von den Zylindern kommenden flüssigkeitsgekühlten Abgaskanäle zusammenlaufen nicht größer als der doppelte Turbinenraddurchmesser.

Durch die erfindungsgemäße Brennkraftmaschine wird die der Erfindung zugrunde liegende Aufgabe gelöst, nämlich eine aufgeladene Brennkraftmaschine gemäß dem Oberbegriff des Anspruchs 1 bereitzustellen, bei der eine möglichst motornahe Anordnung sowohl der Turbine als auch des Abgasnachbehandlungssystems realisiert wird.

Weist der mindestens eine Zylinderkopf drei oder mehr Zylinder auf und führen nur die Abgasleitungen von zwei Zylindern innerhalb des Zylinderkopfes zu einer Gesamtabgasleitung zusammen, handelt es sich bei einer Brennkraftmaschine, welche mit einem derartigen Zylinderkopf ausgestattet ist, um eine erfindungsgemäße Brennkraftmaschine.

Ausführungsformen des Zylinderkopfes mit beispielsweise vier in Reihe angeordneten Zylindern, bei denen die Abgasleitungen der außenliegenden Zylinder und die Abgasleitungen der innenliegenden Zylinder jeweils zu einer Gesamtabgasleitung zusammenführen, können ebenfalls zur Ausbildung einer erfindungsgemäßen Brennkraftmaschine dienen. Diese Ausführungsform gestattet den Einsatz von zwei Turbinen bzw. zwei Abgasturboladern bei Verwendung eines einzelnen Zylinderkopfes und eignet sich auch für den Einsatz einer zweiflutigen Turbine. Eine zweiflutige Turbine weist einen Eintrittsbereich mit zwei Eintrittskanälen auf, wobei die beiden Gesamtabgasleitungen mit der zweiflutigen Turbine in der Art verbunden werden, dass jeweils eine Gesamtabgasleitung in einen Eintrittskanal mündet. Die Zusammenführung der beiden in den Gesamtabgasleitungen geführten Abgasströmungen erfolgt gegebenenfalls stromabwärts bzw. in der Turbine, aber vorliegend nicht stromaufwärts der Turbine.

Vorteilhaft sind auch Ausführungsformen, bei denen die Abgasleitungen sämtlicher Zylinder des mindestens einen Zylinderkopfes innerhalb des Zylinderkopfes zu einer einzigen Gesamtabgasleitung zusammenführen.

Weitere vorteilhafte Ausführungsformen der aufgeladenen Brennkraftmaschine werden im Zusammenhang mit den Unteransprüchen erörtert.

Vorteilhaft sind Ausführungsformen der aufgeladenen Brennkraftmaschine, bei denen die mindestens eine Turbine und der mindestens eine Zylinderkopf separate Bauteile darstellen, welche zur Ausbildung der Brennkraftmaschine kraftschlüssig, formschlüssig und/oder stoffschlüssig miteinander verbunden sind.

Ein modularer Aufbau, bei dem die Turbine und der Zylinderkopf miteinander zu verbinden sind, hat den Vorteil, dass die einzelnen Bauteile, nämlich die Turbine und der Zylinderkopf, nach dem Baukastenprinzip auch mit anderen Bauteilen, insbesondere anderen Zylinderköpfen bzw. Turbinen, kombiniert werden können. Die vielfältige Einsetzbarkeit eines Bauteils erhöht in der Regel die Stückzahl, wodurch die Herstellungskosten gesenkt werden können. Zudem werden die Kosten gesenkt, die entstehen, falls die Turbine bzw. der Zylinderkopf infolge eines Defekts auszutauschen, d. h. zu ersetzen ist. Vorteilhaft sind auch Ausführungsformen, bei denen das Turbinengehäuse der mindestens einen Turbine zumindest teilweise in dem mindestens einen Zylinderkopf integriert ist, so dass der Zylinderkopf und zumindest ein Teil des Turbinengehäuses ein monolithisches Bauteil bilden.

Vorteilhafterweise ist dabei das monolithische Bauteil als gegossenes Bauteil ausgebildet, vorzugsweise aus Aluminium, wodurch eine besonders hohe Gewichtsersparnis erzielt wird im Vergleich zur Verwendung von Stahl. Die Kosten für die Bearbeitung des Aluminiumbauteils sind ebenfalls niedriger.

Nichtsdestotrotz kann das monolithische Bauteil auch aus Grauguß oder anderen Gußmaterialien hergestellt werden. Denn unabhängig von der Art des verwendeten Materials bleiben die Vorteile eines monolithisch ausgebildeten Bauteils gemäß der in Rede stehenden Ausführungsform erhalten, insbesondere die kompakte Bauweise, die grundsätzliche Gewichtsersparnis auch durch den Wegfall der nicht notwendigen Verbindungselemente, das verbesserte Ansprechverhalten der Turbine infolge der überaus motornahen Anordnung und dergleichen.

Eine motornahe Anordnung der Turbine und die kompakte Bauweise können insbesondere realisiert werden, weil ein Zugriff für Montagewerkzeuge bei der konstruktiven Auslegung des Turbinengehäuses nicht mehr berücksichtigt werden muß. Das Gehäuse ist vergleichsweise kleinvolumig und das Laufrad der Turbine kann in der Nähe zum Eintrittsbereich in die Turbine angeordnet werden.

Die Ausbildung einer gasdichten, thermisch hochbelastbaren und daher kostenintensiven Verbindung zwischen Zylinderkopf und Turbine entfällt prinzipbedingt durch die einteilige Ausbildung. Infolgedessen besteht auch nicht mehr die Gefahr, dass Abgas ungewollt infolge einer Leckage in die Umgebung austritt.

Ist die Turbine Bestandteil eines Abgasturboladers sind in diesem Zusammenhang Ausführungsformen vorteilhaft, bei denen die Welle des Abgasturboladers mitsamt dem vormontierten Turbinen- und Verdichterlaufrad als eigenständige vorgefertigte Baugruppe, beispielsweise in Form einer Kassette, in das im Zylinderkopf integrierte Turbinengehäuse bzw. Turboladergehäuse eingeschoben wird, was die Montagezeit erheblich verkürzt. Dabei nimmt das Gehäuse nicht nur Turbinenkomponenten, sondern auch Teile des Verdichters auf.

Vorteilhaft sind Ausführungsformen der aufgeladenen Brennkraftmaschine, bei denen
- jeder Zylinder mindestens zwei Auslaßöffnungen aufweist, und
- die Abgasleitungen von mindestens zwei Zylindern unter Ausbildung eines integrierten Abgaskrümmers innerhalb des Zylinderkopfes zu einer Gesamtabgasleitung zusammenführen, wobei zunächst die Abgasleitungen der mindestens zwei Auslaßöffnungen je Zylinder zu einer dem Zylinder zugehörigen Teilabgasleitung zusammenführen, bevor diese Teilabgasleitungen zu der Gesamtabgasleitung zusammenführen.

Wie bereits in der Beschreibungseinleitung erwähnt wurde, ist es während des Ausschiebens der Abgase im Rahmen des Ladungswechsels ein vorrangiges Ziel, möglichst schnell möglichst große Strömungsquerschnitte freizugeben, um ein effektives Abführen der Abgase zu gewährleisten, weshalb das Vorsehen von mehr als einer Auslaßöffnung je Zylinder vorteilhaft ist.

Das stufenweise Zusammenführen der Abgasleitungen via Teilabgasleitungen zu einer Gesamtabgasleitung trägt zu einer kompakteren, d. h. weniger voluminösen Bauweise des Zylinderkopfes und damit insbesondere zu einer Gewichtsreduzierung und einem effektiveren Packaging im Motorraum bei. Zudem wird die Gesamtwegstrecke der Abgasleitungen des Abgaskrümmers weiter verkürzt.

Vorteilhaft sind Ausführungsformen der aufgeladenen Brennkraftmaschine, bei denen der mindestens eine Zylinderkopf mit einem integrierten Kühlmittelmantel ausgestattet ist.

Infolge der Integration mindestens eines Abgaskrümmers ist der erfindungsgemäße Zylinderkopf thermisch höher belastet als ein herkömmlicher Zylinderkopf, der mit einem externen Krümmer ausgestattet ist, weshalb höhere Anforderungen an die Kühlung gestellt werden.

Grundsätzlich besteht die Möglichkeit, die Kühlung in Gestalt einer Luftkühlung oder einer Flüssigkeitskühlung auszuführen. Aufgrund der wesentlich höheren Wärmekapazität von Flüssigkeiten gegenüber Luft können mit der Flüssigkeitskühlung wesentlich größere Wärmemengen abgeführt werden als dies mit einer Luftkühlung möglich ist.

Die Flüssigkeitskühlung erfordert die Ausstattung der Brennkraftmaschine bzw. des Zylinderkopfes mit einem integrierten Kühlmittelmantel, d. h. die Anordnung von das Kühlmittel durch den Zylinderkopf führenden Kühlmittelkanälen. Die Wärme wird bereits im Inneren des Zylinderkopfes an das Kühlmittel, in der Regel mit Additiven versetztes Wasser, abgegeben. Das Kühlmittel wird dabei mittels einer im Kühlkreislauf angeordneten Pumpe gefördert, so dass es im Kühlmittelmantel zirkuliert. Die an das Kühlmittel abgegebene Wärme wird auf diese Weise aus dem Inneren des Zylinderkopfes abgeführt und dem Kühlmittel in einem Wärmetauscher wieder entzogen.

Vorteilhaft sind in diesem Zusammenhang Ausführungsformen der aufgeladenen Brennkraftmaschine, bei denen
- der Kühlmittelmantel einen unteren Kühlmittelmantel, der zwischen dem integrierten Abgaskrümmer und der Montage-Stirnseite des mindestens einen Zylinderkopfes angeordnet ist, und einen oberen Kühlmittelmantel, der auf der dem unteren Kühlmittelmantel gegenüberliegenden Seite des Abgaskrümmers angeordnet ist, aufweist.
Vorteilhaft sind dabei Ausführungsformen, bei denen
- beabstandet zum integrierten Abgaskrümmer an der den Zylindern abgewandten Seite des Abgaskrümmers mindestens eine Verbindung zwischen dem unteren Kühlmittelmantel und dem oberen Kühlmittelmantel vorgesehen ist, die dem Durchtritt von Kühlmittel dient, wobei die mindestens eine Verbindung benachbart zu dem Bereich angeordnet ist, in dem die Abgasleitungen zu der Gesamtabgasleitung zusammenführen.

Mit der mindestens einen Verbindung ist ein Kühlmittelkanal auf der den mindestens zwei Zylindern abgewandten Seite des integrierten Abgaskrümmers angeordnet.

Die Kühlung kann zusätzlich und vorteilhafterweise dadurch verbessert werden, dass zwischen dem oberen und unteren Kühlmittelmantel ein Druckgefälle generiert wird, wodurch wiederum die Geschwindigkeit in der mindestens einen Verbindung erhöht wird, was zu einem erhöhten Wärmeübergang infolge Konvektion führt.

Vorteilhaft sind Ausführungsformen, bei denen der Abstand zwischen der mindestens einen Verbindung und der Gesamtabgasleitung kleiner ist als der Durchmesser eines Zylinders, vorzugsweise kleiner ist als die Hälfte bzw. ein Viertel des Durchmessers eines Zylinders, wobei sich der Abstand als Wegstrecke zwischen der Wandung der Gesamtabgasleitung und der Wandung der mindestens einen Verbindung ergibt.

Weist der mindestens eine Zylinderkopf einen integrierten Kühlmittelmantel auf, sind Ausführungsformen der aufgeladenen Brennkraftmaschine vorteilhaft, bei denen die mindestens eine ein Turbinengehäuse aufweisende Turbine zur Ausbildung einer Flüssigkeitskühlung mit einem Kühlmittelmantel ausgestattet ist, wobei der im Zylinderkopf integrierte Kühlmittelmantel mit dem Kühlmittelmantel der Turbine verbunden ist.

Während die Turbine nach dem Stand der Technik mittels Luftkühlung gekühlt wird, bei der der Wärmeabtransport mittels einer über die Oberfläche des Turbinengehäuses geführten Luftströmung erfolgt, verfügt die Turbine der vorliegenden Ausführungsform über eine Flüssigkeitskühlung.

Aufgrund der wesentlich höheren Kühlleistung einer Flüssigkeitskühlung gegenüber einer Luftkühlung kann auf die Verwendung thermisch hochbelastbarer Werkstoffe zur Herstellung der Turbine bzw. des Turbinengehäuses vollständig oder zumindest teilweise verzichtet werden. Der Einsatz kostenintensiver - häufig nickelhaltiger - Werkstoffe ist dann nicht mehr erforderlich bzw. stark reduziert.

Vorteilhaft sind dabei Ausführungsformen, bei denen das Turbinengehäuse zumindest teilweise aus Aluminium gefertigt ist. Dies bringt gegenüber der Verwendung üblicher Werkstoffe Kostenvorteile mit sich. Darüber hinaus führt der Einsatz von Aluminium zur Herstellung des Turbinengehäuses zu einem geringeren Gewicht.

Eine flüssigkeitsgekühlte Turbine eignet sich insbesondere für eine aufgeladene Brennkraftmaschine, die durch hohe Abgastemperaturen gekennzeichnet ist.

Vorliegend ist der im Zylinderkopf integrierte Kühlmittelmantel mit dem Kühlmittelmantel der Turbine verbunden, so dass die übrigen zur Ausbildung eines Kühlkreislaufes erforderlichen Bauteile und Aggregate grundsätzlich nur in einfacher Ausfertigung vorgesehen werden müssen und sowohl für den Kühlkreislauf der Turbine als auch für den des Zylinderkopfes verwendet werden können, was zu Synergien und erheblichen Kosteneinsparungen führt, aber auch eine Gewichtsersparnis mit sich bringt. So werden vorzugsweise nur eine Pumpe zur Förderung des Kühlmittels und ein Behältnis zur Bevorratung des Kühlmittels vorgesehen. Die im Zylinderkopf und im Turbinengehäuse an das Kühlmittel abgegebene Wärme kann dem Kühlmittel in einem gemeinsamen Wärmetauscher entzogen werden.

Darüber hinaus kann der Kühlmittelmantel der Turbine via Zylinderkopf mit Kühlmittel versorgt werden, so dass keine weiteren Kühlmittelzuführ- und Abführöffnungen am Turbinengehäuse vorgesehen werden müssen und auch auf weitere Kühlmittelleitungen verzichtet werden kann.

Die Flüssigkeitskühlung der thermisch hoch belasteten Bauteile kann die herkömmlichen Hitzebleche, die nach dem Stand der Technik den Abgaskrümmer und/oder das Turbinengehäuse zum Schutz benachbarter Bauteile vor hohen Temperaturen abschirmen, entbehrlich machen.

Eine zumindest teilweise Integration des Turbinengehäuses in den Zylinderkopf erleichtert das Verbinden des im Zylinderkopf integrierten Kühlmittelmantels mit dem Kühlmittelmantel der Turbine. Dabei kann auch ein Teil des in den Zylinderkopf integrierten Kühlmittelmantels gleichzeitig den Kühlmittelmantel der Turbine mit ausbilden. In Bezug auf die Kühlmittelkreisläufe bzw. die Verbindung der Kühlmittelmäntel und der Leckage von Kühlmittel gilt das hinsichtlich des Abgasstroms weiter oben bereits Gesagte in analoger Weise.

Weist der Kühlmittelmantel des Zylinderkopfes einen unteren Kühlmittelmantel und einen oberen Kühlmittelmantel auf, sind Ausführungsformen vorteilhaft, bei denen der untere Kühlmittelmantel und/oder der obere Kühlmittelmantel mit dem Kühlmittelmantel der Turbine verbunden sind.

Falls der untere Kühlmittelmantel und der obere Kühlmittelmantel mit dem Kühlmittelmantel der Turbine bzw. über den Kühlmittelmantel der Turbine miteinander verbunden sind, ist ein Druckgefälle als treibende Kraft zur Förderung des Kühlmittels durch den Kühlmittelmantel der Turbine vorteilhaft.

Die Turbine kann grundsätzlich via Zylinderkopf mit Öl versorgt werden. Dabei wird eine Leitung zur Versorgung der Turbine mit Öl vom Ölleitungssystem des Zylinderkopfes abgezweigt. Das Öl dient der Schmierung der Lagerung der Welle, welche - auch aufgrund der sehr hohen Drehzahlen - in der Regel als Gleitlager, d. h. hydrodynamisches Lager ausgebildet ist. Auch bezüglich einer derartigen Ölversorgung ist eine einteilige, d. h. monolithische Ausbildung von Zylinderkopf und Turbinengehäuse vorteilhaft.

Vorteilhaft sind Ausführungsformen der aufgeladenen Brennkraftmaschine, bei denen die Turbine eine Radialturbine ist. Bei Radialturbinen erfolgt die Anströmung der Laufschaufeln im Wesentlichen radial. "Im Wesentlichen radial" bedeutet, dass die Geschwindigkeitskomponente in radialer Richtung größer ist als die axiale Geschwindigkeitskomponente. Der Geschwindigkeitsvektor der Strömung schneidet die Welle bzw. Achse der Turbine und zwar in einem rechten Winkel, falls die Anströmung exakt radial verläuft.

Eine Radialturbine erleichtert es, das Laufrad der Turbine in der erfindungsgemäßen Weise, d. h. auf der der Montage-Stirnseite abgewandten Seite des integrierten Abgaskrümmers anzuordnen. Denn damit die Laufschaufeln des Laufrades radial angeströmt werden, wird der Eintrittsbereich zur Zuführung des Abgases vorzugsweise als rundum verlaufendes Spiral- oder Schneckengehäuse ausgebildet, so dass die in die Turbine einmündende Gesamtabgasleitung tangential zum Laufrad verlaufend angeordnet wird.

Die Turbine kann mit einer variablen Turbinengeometrie ausgestattet werden, die eine weitergehende Anpassung an den jeweiligen Betriebspunkt der Brennkraftmaschine durch Verstellen der Turbinengeometrie bzw. des wirksamen Turbinenquerschnittes gestattet.

Grundsätzlich können zur Verbesserung der Drehmomentcharakteristik der Brennkraftmaschine auch mehrere Turbolader eingesetzt werden, deren Turbinen bzw. Verdichter in Reihe bzw. parallel angeordnet sind.

Vorteilhaft sind auch Ausführungsformen der aufgeladenen Brennkraftmaschine, bei denen die mindestens eine Turbine ein zumindest teilweise aus Blech geformtes Turbinengehäuse, vorzugsweise ein vollständig aus Blech geformtes Turbinengehäuse, aufweist.

Bei aus Blech geformten Gehäusen können Wandstärken von beispielsweise eineinhalb Millimeter realisiert werden, wohingegen gegossene Gehäuse Wandstärken zwischen drei und fünf Millimetern aufweisen.

Ein aus Blech gefertigtes Turbinengehäuse zeichnet sich zum einen durch ein vergleichsweise geringes Gewicht aus, was zur Reduzierung des Gesamtgewichts und damit des Kraftstoffverbrauchs beiträgt.

Zum anderen wird die thermische Trägheit des Gehäuses bzw. der Turbine durch die Verwendung von Blech zur Herstellung des Turbinengehäuses vermindert, was wie bereits beschrieben, vorteilhaft ist, da das Abgas am Eintritt in die Turbine eine höhere Temperatur und damit auch eine höhere nutzbare Abgasenthalpie aufweist und das stromabwärts der Turbine angeordnete Abgasnachbehandlungssystem während der Warmlaufphase schneller eine zur Konvertierung der Schadstoffe erforderliche Mindesttemperatur bzw. leichter eine zur Regeneration oder Reinigung erforderliche Betriebstemperatur erreicht.

Vorteilhaft sind Ausführungsformen der aufgeladenen Brennkraftmaschine, bei denen das mindestens eine Abgasnachbehandlungssystem ein kombiniertes Abgasnachbehandlungssystem ist.

Vorteilhaft sind dabei insbesondere Ausführungsformen der aufgeladenen Brennkraftmaschine, bei denen das kombinierte Abgasnachbehandlungssystem ein Vier-Wege-Katalysator ist.

Ein Vier-Wege-Katalysator umfaßt einen Oxidationskatalysator, der insbesondere zur Oxidation des im Abgas befindlichen Kohlenmonoxids und der unverbrannten Kohlenwasserstoffe dient, einen Speicherkatalysator zum Speichern und Reduzieren der im Abgas befindlichen Stickoxide und einen Partikelfilter zum Sammeln und Verbrennen der im Abgas befindlichen Rußpartikel. Durch die Kombination der verwendeten Nachbehandlungssysteme wird eine zufriedenstellende Reduzierung der vier maßgeblichen Schadstoffe erzielt, weshalb der Katalysator auch als Vier-Wege-Katalysator bezeichnet wird.

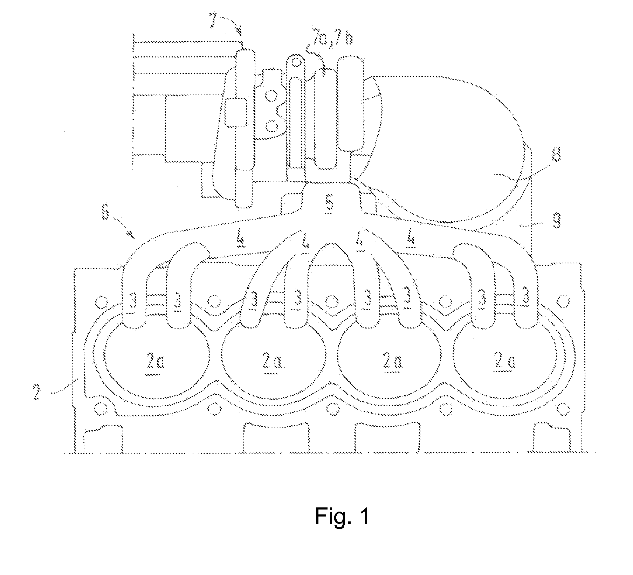

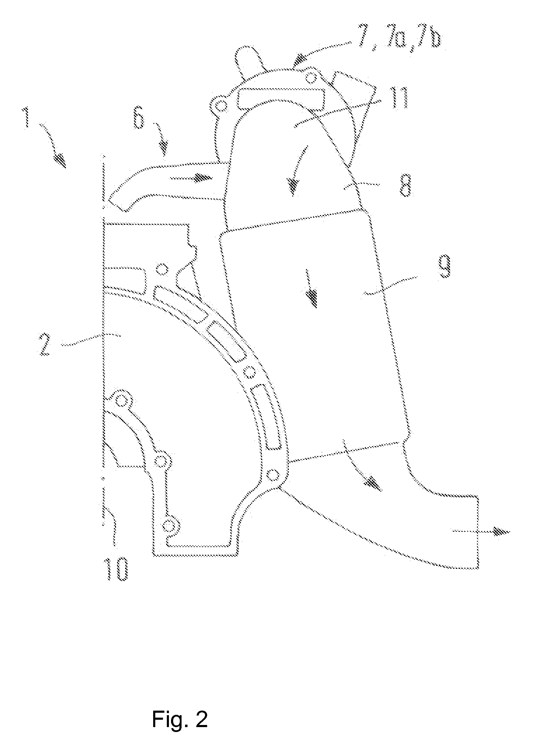

Im Folgenden wird die Erfindung anhand eines Ausführungsbeispieles gemäß den Figuren 1 und 2 näher beschrieben. Hierbei zeigt:
- Fig. 1: in einer Draufsicht die Anordnung des Krümmers mitsamt der Turbine und dem Abgasnachbehandlungssystem einer ersten Ausführungsform der aufgeladenen Brennkraftmaschine, und
- Fig. 2: die in Figur 1 dargestellte Anordnung in einer Seitenansicht und
- Fig. 3: eine perspektivische Ansicht eines erfindungsgemäßen Zylinderkopfes mit einem integrierten Abgaskrümmer, teilweise in Schnittdarstellung und
- Fig.4: schematisch in einer Seitenansicht einer Ausführungsform der Anordnung mit Zylinderkopf und Turbine.

Figur 1 zeigt in einer Draufsicht die Anordnung des Krümmers 6 mitsamt der Turbine 7a und dem Abgasnachbehandlungssystem 9 einer ersten Ausführungsform der aufgeladenen Brennkraftmaschine 1.

Der in Figur 1 dargestellte Zylinderblock 2 verfügt über vier Zylinder 2a, die in Reihe angeordnet sind. Es handelt sich folglich um den Zylinderblock 2 eines Vier-Zylinder-Reihenmotors 1.

Jeder der vier Zylinder 2a weist zwei Auslaßöffnungen auf, wobei sich an jede Auslaßöffnung eine Abgasleitung 3 zum Abführen des Abgases anschließt.

Die Abgasleitungen 3 sämtlicher Zylinder 2a führen unter Ausbildung eines integrierten Abgaskrümmers 6 innerhalb des Zylinderkopfes (nicht dargestellt) zu einer Gesamtabgasleitung 5 zusammen. Dabei führen die Abgasleitungen 3 jedes Zylinders 2a zunächst zu einer dem Zylinder 2a zugehörigen Teilabgasleitung 4 zusammen, bevor diese Teilabgasleitungen 4 zu einer Gesamtabgasleitung 5 zusammenführen.

Das Abgas wird via Gesamtabgasleitung 6 aus dem Zylinderkopf abgeführt und einer am Zylinderkopf angeordneten Turbine 7a zugeführt. Die Turbine 7a ist Bestandteil eines Abgasturboladers 7 und weist ein Laufrad auf, welches in einem Turbinengehäuse 7b drehbar auf einer Welle gelagert ist. Das durch die Turbine 7a hindurchgeführte Abgas wird über ein gekrümmtes Verbindungsstück 8 einem Abgasnachbehandlungssystem 9 zugeführt, welches stromabwärts der Turbine 7a angeordnet ist.

Figur 2 zeigt die in Figur 1 dargestellte Anordnung in einer Seitenansicht. Es soll vorliegend nur ergänzend zu Figur 1 ausgeführt werden, weshalb im Übrigen Bezug genommen wird auf Figur 1. Für dieselben Bauteile wurden dieselben Bezugszeichen verwendet.

Das Abgasnachbehandlungssystem 9 ist seitlich des Zylinderblocks 2 angeordnet und zwar in der Art, dass es sich im Wesentlichen in Richtung der Zylinder erstreckt, d. h. die Längsachse des Abgasnachbehandlungssystems 9, welche durch die Hauptdurchströmungsrichtung (mit Pfeil kenntlich gemacht) des Abgases vorgegeben wird, bildet mit den Zylinderlängsachsen 10 in der Projektion in Richtung der Kurbelwelle einen spitzen Winkel.

Die Anordnung des Abgasnachbehandlungssystems 9 seitlich des Zylinderblocks 2 wird dadurch erleichtert, dass das Laufrad der Turbine 7a oberhalb des integrierten Abgaskrümmers 6, d. h. auf der dem Zylinderblock 2 abgewandten Seite des Krümmers 6 angeordnet ist. Die Drehachse 11 des Laufrades, d.h. die Turbinenwelle 11, auf der das Laufrad drehbar im Turbinengehäuse 7b gelagert ist, liegt oberhalb des Krümmers 6, d. h. auf der dem Zylinderblock 2 abgewandten Seite des Krümmers 6.

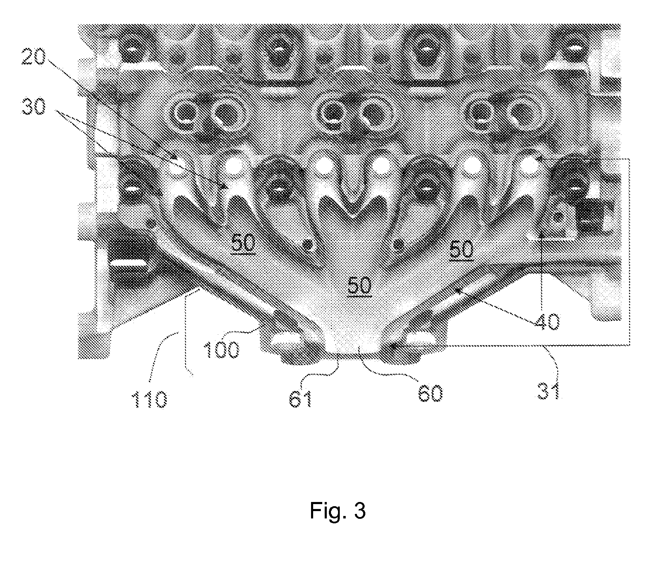

Die erfindungsgemäße Motoranordnung mit einer Brennkraftmaschine weist einen Zylinderblock mit wenigstens zwei Zylindern auf, wobei jeder Zylinder wenigstens wie in Fig. 3 dargestellt eine durch ein Auslassventil selektiv verschließbare Auslassöffnung 20 zur Abführung der Abgase aufweist. Die Abgase der einzelnen Auslassöffnungen 20 werden durch Abgasleitungen 30 geführt, die sich überwiegend innerhalb des Zylinderkopfes 100 zu bevorzugt einer Gesamtabgasleitung 60 vereinigen. wobei die im Zylinderkopf 100 vorgesehenen Abgaswege durch in der Nähe dieser Abgaswege vorgesehene Kühlmittelkanäle 40 flüssigkeitsgekühlt werden.

Etwa im Bereich des Übergangs der den Abgaskrümmer bildenden flüssigkeitsgekühlten Abgaskanäle 50 zur Gesamtabgasleitung 60 ist die Stelle bzw. der Bereich angeordnet, in dem die Abgasleitungen zu der Gesamtabgasleitung zusammenführen. Dies ist im Wesentlichen die Stelle, an der die Stromfäden der von den Zylindern kommenden flüssigkeitsgekühlten Abgaskanäle 50 zusammenlaufen. Als Stromfäden sind hier etwa die Mittellinien der der von den Zylindern kommenden flüssigkeitsgekühlten Abgaskanäle 50 anzusehen.

Der am Zylinderkopf integrierte, hervorragende Bereich 110 wird ebenfalls flüssigkeitsgekühlt und dient im wesentlichen der Gewicht sparenden Ausbildung einer Anschlussfläche für eine erste abgasdurchströmten Einrichtung. Der Bereich 110 kann zur verstärkten Flüssigkeitskühlung auch weniger stark hervorragen, insbesondere etwa fluchtend mit der Zylinderkopfaußenwand ausgebildet sein. Die Gesamtabgasleitung 60 geht außerhalb des Zylinderkopfes 100 in eine erste abgasdurchströmte Einrichtung über. Zur Optimierung von schneller Aufheizung der ersten abgasdurchströmte Einrichtung, welch hier beispielhaft als Turbolader dargestellt ist, und in Verbindung damit zur Absenkung von dessen maximalen Betriebstemperatur ist als Verhältnis der Flächensumme der Innenwandungen 50 der flüssigkeitsgekühlten Abgaswege im Zylinderkopf 100, gemessen von den Auslassöffnungen 20 bis zum Austritt 61 der bevorzugt einen Gesamtabgasleitung 60 aus dem Zylinderkopf 100, bezogen auf die Flächensumme der Innenwandungen der Abgaswege 50, gemessen von den Auslassöffnungen 20 bis zu einem Bezugselement der ersten abgasdurchströmten Einrichtung außerhalb des Zylinderkopfes, auf einen Wert ausgelegt, der mehr als 50%, bevorzugt mehr als 65%, besonders bevorzugt mehr als 80% und ganz besonders bevorzugt mehr als 85% beträgt. Die Innenwandungen 50 der flüssigkeitsgekühlten Abgaswege im Zylinderkopf 100, von den Auslassöffnungen 20 bis zum Austritt 61 der bevorzugt einen Gesamtabgasleitung 60 aus dem Zylinderkopf 100 werden als integrierter Abgaskrümmer 31 bezeichnet.

Im Fall des beispielhaft dargestellten Turboladers ist das Bezugselement zu Bestimmung dieses Flächenverhältnisses der Anfangsbereich des Spiralgehäuses 120, also die Kontur, die den Übergang des Eintrittsbereichs 70 in das Spiralgehäuse darstellt.

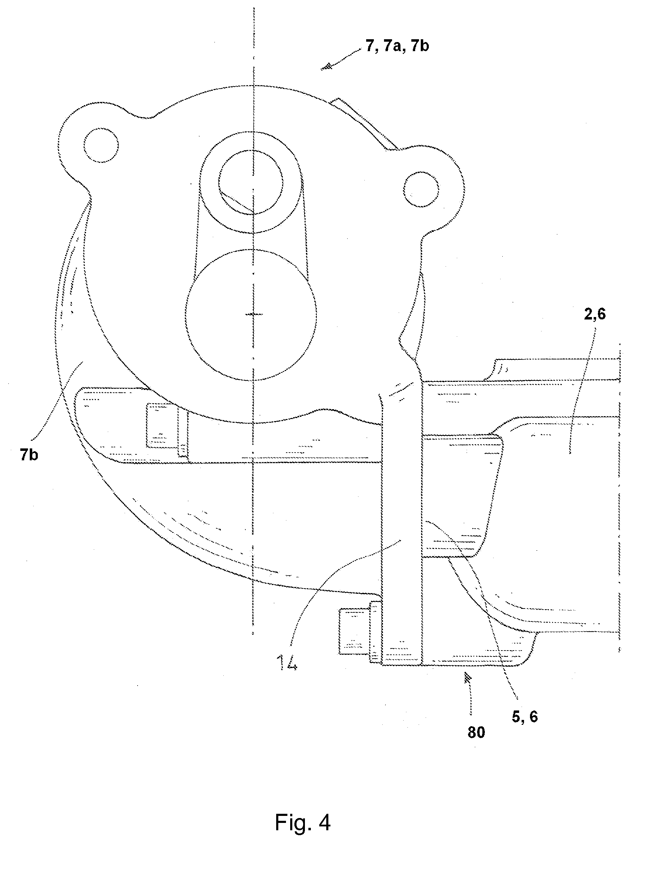

Figur 4 zeigt schematisch in einer Seitenansicht einer Anordnung der Turbine 7a, 7b. Der Zylinderkopf 2 verfügt über einen integrierten Abgaskrümmer 6 zum Abführen von Abgasen über eine aus dem Zylinderkopf 2 austretende Gesamtabgasleitung 5. Die Turbine 7a, 7b weist einen Eintrittsbereich zum Zuführen der Abgase auf, wobei der Eintrittsbereich unmittelbar an die Gesamtabgasleitung 5 anschließt.

Etwa im Bereich des Übergangs von Abgasleitungen 4 zur Gesamtabgasleitung 5 ist die Stelle bzw. der Bereich angeordnet, in dem die Abgasleitungen zu der Gesamtabgasleitung zusammenführen. Dies ist im Wesentlichen die Stelle, an der die Stromfäden der von den Zylindern kommenden flüssigkeitsgekühlten Abgaskanäle (s. Fig. 3, Zf. 50) zusammenlaufen. Als Stromfäden sind hier etwa die Mittellinien der der von den Zylindern kommenden flüssigkeitsgekühlten Abgaskanäle (s. Fig. 3, Zf. 50) anzusehen. In dem Ausführungsbeispiel entspricht der Abstand der Turbinenachse zu der Stelle, an der die Stromfäden der von den Zylindern kommenden flüssigkeitsgekühlten Abgaskanäle (s. Fig. 3, Zf. 50) zusammenlaufen etwa dem Durchmesser der Turbine. Die dem Zylinderkopf zugewandte Außenwand des Turbinengehäuses 7b - etwa über der Bohrung 80 - grenzt tangential an eine durch die Montagefläche des Flansches 14 gedachte, etwa senkrecht auf Bohrung 80 stehende Ebene. Damit ist die dem Zylinderkopf zugewandte Außenwand des Turbinengehäuses 7b näher an der Stelle, an der die Stromfäden der von den Zylindern kommenden flüssigkeitsgekühlten Abgaskanäle (s. Fig. 3, Zf. 50) zusammenlaufen.
Durch die oben liegende Turbine entsteht mehr Raum für den Oxidationskatalysator. Insbesondere wird durch die Verkürzung der Abgasleitungen dessen Anspringtemperatur schneller erreicht.

## Patentansprüche

1. Aufgeladene Brennkraftmaschine (1) mit
- mindestens einem Zylinderkopf mit mindestens zwei Zylindern (2a), bei dem jeder Zylinder (2a) mindestens eine Auslaßöffnung zum Abführen der Abgase aus dem Zylinder (2a) aufweist und sich stromabwärts an jede Auslaßöffnung eine Abgasleitung (3) anschließt,
- mindestens einer Turbine (7a), die ein auf einer Welle (11) drehbar gelagertes Laufrad aufweist, und
- mindestens einem Abgasnachbehandlungssystem (9), wobei
- die Abgasleitungen (3) von mindestens zwei Zylindern (2a) unter Ausbildung eines integrierten Abgaskrümmers (6) innerhalb des Zylinderkopfes zu einer Gesamtabgasleitung (5) zusammenführen und diese Gesamtabgasleitung (5) mit der mindestens einen Turbine (7a) verbunden ist,
- das mindestens eine Abgasnachbehandlungssystem (9) stromabwärts der mindestens einen Turbine (7a) angeordnet ist, und
- der mindestens eine Zylinderkopf an einer Montage-Stirnseite mit einem Zylinderblock (2) verbindbar ist,
**dadurch gekennzeichnet, dass**
- das Laufrad der mindestens einen Turbine (7a) auf der der Montage-Stirnseite abgewandten Seite des integrierten Abgaskrümmers (6) angeordnet ist, und
- das mindestens eine Abgasnachbehandlungssystem (9) seitlich des Zylinderblocks (2) angeordnet ist, wobei sich das Abgasnachbehandlungssystem (9) im Wesentlichen in Richtung der Zylinder (2a) erstreckt.

2. Aufgeladene Brennkraftmaschine (1) nach Anspruch 1, **dadurch gekennzeichnet, dass** die mindestens eine Turbine (7a) und der mindestens eine Zylinderkopf separate Bauteile darstellen, welche zur Ausbildung der Brennkraftmaschine (1) kraftschlüssig, formschlüssig und/oder stoffschlüssig miteinander verbunden sind.

3. Aufgeladene Brennkraftmaschine (1) nach Anspruch 1, **dadurch gekennzeichnet, dass** das Turbinengehäuse (7b) der mindestens einen Turbine (7a) zumindest teilweise in dem mindestens einen Zylinderkopf integriert ist, so dass der Zylinderkopf und zumindest ein Teil des Turbinengehäuses (7b) ein monolithisches Bauteil bilden.

4. Aufgeladene Brennkraftmaschine (1) nach einem der vorherigen Ansprüche, **dadurch gekennzeichnet, dass**
- jeder Zylinder (2a) mindestens zwei Auslaßöffnungen aufweist,
- die Abgasleitungen (3) von mindestens zwei Zylindern (2a) unter Ausbildung eines integrierten Abgaskrümmers (6) innerhalb des Zylinderkopfes zu einer Gesamtabgasleitung (5) zusammenführen, wobei zunächst die Abgasleitungen (3) der mindestens zwei Auslaßöffnungen je Zylinder (2a) zu einer dem Zylinder (2a) zugehörigen Teilabgasleitung (4) zusammenführen, bevor diese Teilabgasleitungen (4) zu der Gesamtabgasleitung (5) zusammenführen.

5. Aufgeladene Brennkraftmaschine (1) nach einem der vorherigen Ansprüche, **dadurch gekennzeichnet, dass** der mindestens eine Zylinderkopf mit einem integrierten Kühlmittelmantel ausgestattet ist.

6. Aufgeladene Brennkraftmaschine (1) nach Anspruch 5, **dadurch gekennzeichnet, dass** der Kühlmittelmantel einen unteren Kühlmittelmantel, der zwischen dem integrierten Abgaskrümmer (6) und der Montage-Stirnseite des mindestens einen Zylinderkopfes angeordnet ist, und einen oberen Kühlmittelmantel, der auf der dem unteren Kühlmittelmantel gegenüberliegenden Seite des Abgaskrümmers (6) angeordnet ist, aufweist.

7. Aufgeladene Brennkraftmaschine (1) nach Anspruch 5 oder 6, **dadurch gekennzeichnet, dass** die mindestens eine ein Turbinengehäuse (7b) aufweisende Turbine (7a) zur Ausbildung einer Flüssigkeitskühlung mit einem Kühlmittelmantel ausgestattet ist, wobei der im Zylinderkopf integrierte Kühlmittelmantel mit dem Kühlmittelmantel der Turbine (7a) verbunden ist.

8. Aufgeladene Brennkraftmaschine (1) nach Anspruch 7**, dadurch gekennzeichnet, dass** der untere Kühlmittelmantel und/oder der obere Kühlmittelmantel mit dem Kühlmittelmantel der Turbine (7a) verbunden sind.

9. Aufgeladene Brennkraftmaschine (1) nach einem der vorherigen Ansprüche, **dadurch gekennzeichnet, dass** das mindestens eine Abgasnachbehandlungssystem (9) ein kombiniertes Abgasnachbehandlungssystem ist.

10. Aufgeladene Brennkraftmaschine (1) nach Anspruch 9, **dadurch gekennzeichnet, dass** das kombinierte Abgasnachbehandlungssystem ein Vier-Wege-Katalysator ist.
